# EUROPEAN PATENT APPLICATION

(11) **EP 3 223 544 A1**
(43) Date of publication of application: **27.09.2017**
(21) Application number: 16162335.0
(22) Date of filing: 24.03.2016
(51) Int. Cl.: H04W 4/00, H04W 4/04, H04W 76/02, H04L 29/08

(54) **COMMUNICATION APPARATUS AND METHOD FOR COMMUNICATING WITH AT LEAST ONE COMMUNICATION DEVICE REMOTE FROM A VEHICLE**

(71) Applicant: Alpine Electronics, Inc., Tokyo (JP)
(72) Inventor: GOPI, Anooj, 70567 Stuttgart (DE)
(74) Representative: Klunker . Schmitt-Nilson . Hirsch

(57) **Abstract**

A communication apparatus (1) for communicating with at least one communication device (30) remote from a vehicle (2), in an aspect, comprises a proximity sensor device (3) configured to be installed in a vehicle (2) and to sense a mobile phone (20) outside of the vehicle and to communicate with the mobile phone (20) when the mobile phone (20) is within a certain distance while the vehicle (2) is locked, a mobile network communication device (17) configured to establish a communication with the at least one communication device (30) remote from the vehicle via a communication network (4), a storing device (16) configured to be installed in the vehicle (2) and to store communication device data which are indicative of identifying the at least one communication device (30) for establishing a communication via the communication network (4), and a processing device (13) which is coupled with the proximity sensor device (3) for receiving configuration data (21) of the mobile phone (20) sensed by the proximity sensor device (3). The processing device (13), while the vehicle (2) is locked, is configured to use the configuration data (21) to build up a first communication path (22) between the mobile network communication device (17) and the mobile phone (20), and configured to build up a second communication path (32) between the mobile network communication device (17) and the at least one communication device (30) via the communication network (4) according to the stored communication device data such that any one of voice data, text data and image data are communicated between the mobile phone (20) and the at least one communication device (30).

## Description

The present invention is related to a communication apparatus and a method for communicating with at least one communication device remote from a vehicle.

There may be situations in which a person may want to contact the owner or driver of a parked car, for example in a situation in which the car is obstructing a drive way and the person wants to contact the driver for clearing the drive way by moving the car away. In most situations, it is not easy to contact the owner or driver of the car in a fast and secure way without revealing the phone number of the owner or driver, such as by placing it in the car visible for outside persons.

JP 2005-244485 A discloses a communication apparatus and a communication method for reducing the cost without preparing a server for calling a speech partner and preventing leakage of personal information. A storage section stores a number of a mobile phone of an owner of an automobile with which the communication apparatus is equipped. A comparison circuit discriminates whether or not a number of a license plate of automobile identification information being information to identify the automobile received by a reception circuit is coincident with a number of a license plate of automobile unique information being information unique to the automobile stored in a storage section and with which the communication apparatus is equipped. A calling circuit outputs a call signal to call the mobile phone of the owner of the automobile when the numbers of the license plates are coincident with each other. A data switching section switches input and output of voice data.

JP 2004-312651 A discloses a paging system for the owner of a parking vehicle, comprising an information communication terminal of an informer who desires to move the parking vehicle, an information communication terminal of the owner of the vehicle, and a server for mediating the transmission of information via a communication network between both the terminals. The server includes a personal information database in which the personal information of the owner of the vehicle is stored, and retrieves and communicates with the owner of the vehicle from the personal information database, when the informer requests to move the vehicle. In both approaches to contact the owner of an automobile, it may be quite cumbersome to retrieve the appropriate information, particularly when having to take a picture of the number plate of the vehicle and using a costly and often slow internet connection to upload such information to a server. Moreover, it may be required to store personal information on a server, the access of which is often hardly controllable which may not be preferable for some owners of vehicles.

It is therefore an object of the invention to provide a communication apparatus and a method for communicating with at least one communication device remote from a vehicle, such as a communication device of the owner of the vehicle, which allow for an easy call of the owner of the vehicle by a person who wants to contact the owner of the vehicle while not revealing any contact details of the owner.

The invention relates to a communication apparatus and a method for communicating with at least one communication device remote from a vehicle according to the independent claims. Embodiments are disclosed herein in the following description and in the dependent claims.

According to an aspect, there is provided a communication apparatus for communicating with at least one communication device remote from a vehicle, comprising a proximity sensor device configured to be installed in a vehicle and to sense a mobile phone outside of the vehicle and to communicate with the mobile phone via at least one communication protocol when the mobile phone is within a certain distance from the vehicle and while the vehicle is locked, a mobile network communication device configured to be installed in the vehicle and to establish a communication with the at least one communication device remote from the vehicle via a communication network, a storing device configured to be installed in the vehicle and to store communication device data which are indicative of identifying the at least one communication device for establishing a communication via the communication network, and a processing device which is coupled with the proximity sensor device for receiving configuration data of the mobile phone sensed by the proximity sensor device. The processing device, while the vehicle is locked, is configured to use the configuration data to build up a first communication path between the mobile network communication device and the mobile phone, and configured to build up a second communication path between the mobile network communication device and the at least one communication device via the communication network according to the stored communication device data. The processing device is further configured to build up the first and second communication paths such that any one of voice data, text data and image data are communicated between the mobile phone and the at least one communication device.

According to an embodiment, the processing device is configured to be installed at least in part in the vehicle.

According to another aspect, there is disclosed a communication apparatus for communicating with at least one communication device remote from a vehicle, comprising a proximity sensor device configured to be installed in a vehicle and to sense a mobile phone outside of the vehicle and to communicate with the mobile phone via at least one communication protocol when the mobile phone is within a certain distance from the vehicle and while the vehicle is locked, a mobile network communication device configured to establish a communication with the at least one communication device remote from the vehicle via a communication network, a storing device configured to be installed in the vehicle and to store communication device data which are indicative of identifying the at least one communication device for establishing a communication via the communication network, and a processing device configured to send the stored communication device data to the mobile phone while the vehicle is locked. The processing device is configured to build up a first communication path between the mobile phone and the mobile network communication device, and to cause the mobile network communication device to build up a second communication path to the at least one communication device via the communication network according to the communication device data such that any one of voice data, text data and image data are communicated between the mobile phone and the at least one communication device.

According to an embodiment of this aspect, the mobile network communication device is configured to be installed remote from the vehicle. For example, preferably it is comprised in a server computer remote from the vehicle.

According to further embodiment of this aspect, the processing device is comprised at least in part in at least one of the mobile phone and the mobile network communication device. For example, the processing device may be a discrete or a distributed system. It may communicate with components inside and outside the mobile phone and/or the mobile network communication device for performing the respective function.

According to a further aspect, there is disclosed a method of communicating with at least one communication device remote from a vehicle, comprising the following steps:
- sensing with a proximity sensor device installed in a vehicle a mobile phone outside of the vehicle, the proximity sensor device communicating with the mobile phone via at least one communication protocol when the mobile phone is within a certain distance from the vehicle and receiving configuration data of the mobile phone sensed by the proximity sensor device while the vehicle is locked,
- building up a first communication path between the mobile phone and a mobile network communication device installed in the vehicle using the configuration data of the mobile phone while the vehicle is locked, and building up a second communication path between the mobile network communication device and the at least one communication device via a communication network according to communication device data stored in a storing device installed in the vehicle, wherein the communication device data are indicative of identifying the at least one communication device for establishing a communication via the communication network,
- wherein the first and second communication paths are built up such that any one of voice data, text data and image data are communicated between the mobile phone and the at least one communication device.

According to a further aspect, there is disclosed a method of communicating with at least one communication device remote from a vehicle, comprising the followings steps:
- receiving communication device data stored in a storing device installed in the vehicle by a mobile phone outside of the vehicle after sensing the mobile phone with a proximity sensor device installed in the vehicle while the vehicle is locked, the mobile phone communicating with the proximity sensor device via at least one communication protocol when the mobile phone is within a certain distance from the vehicle and while the vehicle is locked, wherein the communication device data are indicative of identifying the at least one communication device for establishing a communication via a communication network,
- building up a first communication path between the mobile phone and a mobile network communication device, and causing the mobile network communication device to build up a second communication path between the mobile network communication device and the at least one communication device via the communication network according to the received communication device data,
- wherein the first and second communication paths are built up such that any one of voice data, text data and image data are communicated between the mobile phone and the at least one communication device.

According to a further aspect, the invention relates to a computer program product comprising software code sections which are adapted to perform a method as described above when loaded into a computer system. For example, the computer system may be comprised in, or may form part of, the mobile phone, the processing device (which may be part of a head unit of the vehicle), and/or the mobile network communication device. For example, the computer system may be a discrete or a distributed system.

For example, the communication device may be a mobile phone, such as a mobile phone of the owner or driver of the vehicle. The communication device data may comprise a mobile phone number or other data (such as IMSI or IMEI, see below) allowing to identify the communication device for being addressed by the mobile phone of the person who wants to call the owner and mobile network communication device. According to another example, the mobile network communication device may be a GSM unit or network server installed in the vehicle for mobile communication between a mobile phone and any other communication device (such as another mobile phone, or stationary phone, or computer), or may be a network server remote from the vehicle, such as a telecommunications server and/or Internet server run by a network provider. According to an embodiment, the mobile network communication device may be a discrete or distributed system.

The mobile phone and/or communication device may be a typical cell phone or smartphone, as is known in the art, or may be implemented in or as a computer system like a tablet computer or laptop having mobile telephony capabilities. For example, such computer systems include a subscriber identity module or subscriber identification module (SIM) that is intended to store the international mobile subscriber identity (IMSI) number and/or the international mobile station equipment identity (IMEI) and its related key, which are used to identify and authenticate subscribers on mobile telephony devices.

The processing device may be or comprise a microprocessor, such as a central processing unit (CPU), which is typically used for control and data processing in a head unit of a car. It may also be or comprise a microprocessor in a mobile phone and/or in the mobile network communication device.

The storing device may be any volatile or non-volatile memory, for example implemented in a head unit of the vehicle. It may be written with information through any appropriate human machine interface, in wired or wireless manner, as known in the art.

A communication between the respective components as used herein may be in wired or wireless manner, implementing for example technologies like Bluetooth ® (a wireless technology standard for exchanging data over short distances, like using short-wavelength UHF radio waves in the ISM band from 2.4 to 2.485 GHz) or WiFi (a local area wireless computer networking technology that allows electronic devices to connect to a network, such as by using the 2.4 GHz UHF and 5 GHz SHF ISM radio bands). Any other wired or wireless communication technology may also be used.

According to an embodiment, the communication device data are indicative of a communication device of the owner and/or driver of the vehicle.

According to an embodiment, the storing device is configured to store communication device data of a plurality of communication devices of different users, wherein the storing device is further configured to store information indicative of whom of the users was driving the vehicle at last and which information is included in the communication device data.

According to an embodiment, the communication apparatus further comprises a human machine interface by means of which a user is capable of configuring the communication device data of the at least one communication device, such as by entering the respective IMSI, IMEI, and/or mobile phone number of the communication device.

According to an embodiment, the communication device data include at least one of a time and date information. The processing device may be configured to use the at least one of time and date information whether or not to build up at least one of the first and second communication paths, and/or the processing device may be configured to use the at least one of time and date information to select a particular communication device among a plurality of communication devices, the communication device data of which are stored in the storing device.

According to the above embodiments, if the car is owned/handled by multiple persons, the appropriate owner or person can be contacted based on following : Who was driving the car last time , or based on a configuration of a preferred owner to be contacted at a particular point of time or time slot. There could be possibly a calendar syncronization on the owner's communication device (such as mobile phone) according to which, if e.g. the owner is in a meeting, no phone call is allowed to be put through to the owner's communication device, but only text messages. Accordingly, there is a possibility to make sure that the right person is contacted at the right time, which makes it more convenient and practical and avoids unnecessary interrupts for the owner of the car.

According to an embodiment, the proximity sensor device is or includes a Near Field Communication (NFC) sensor device. The used proximity sensor, like an NFC sensor, is capable of communicating with the mobile phone via at least one communication protocol when the mobile phone is within a certain distance from the vehicle. Typically, such distance is relatively short as compared to distances used in connection with Bluetooth® or WiFi communication techniques. This is advantageous insofar as in a case of approaching a vehicle with the mobile phone, only the proximity sensor of the intended vehicle is responding since any other vehicles are out of sensor distance.

Typically, Near field communication (NFC) comprises at least one or a set of communication protocols that enable two electronic devices, one of which is usually a portable device such as a smartphone, to establish communication by bringing them within approx. 10 - 20 cm distance of each other, or less. In some instances, NFC typically operates at 13.56 MHz on ISO/IEC 18000-3 air interface. Near-field communication typically uses magnetic induction between two loop antennas located within each other's near field, effectively forming an air-core transformer. A working distance, particularly with compact standard antennas, is up to 20 cm (usual practical working distance is about in a range of 10 cm).

Typically, NFC sensors and devices can work in three modes, which may also be used at least in part in connection with the present invention, depending on particular needs and circumstances:
NFC card emulation - which enables NFC-enabled devices such as smartphones to act like smart cards;
NFC reader/writer - enables NFC-enabled devices to read information stored on inexpensive NFC tags embedded in labels or other devices;
NFC peer-to-peer - enables two NFC-enabled devices to communicate with each other to exchange information in an adhoc fashion.

In the latter case, the two NFC-enabled devices are the proximity sensor device on the one hand, and the mobile phone on the other hand, which communicate with each other to exchange the information as described herein.

NFC tags are passive data stores which can be read, and under some circumstances written to, by an NFC device. They typically contain data and are read-only in normal use, but may be rewritable. For example, the storing device according to the invention may be part of such NFC tag, or may be comprised as a memory, or a part of a memory, in the vehicle, such as in a head unit of the vehicle.

Accordingly, the owner of the vehicle can be contacted by placing the mobile phone near the NFC (Near Field Communication) device in the vehicle. This is more convenient, faster and reliable than taking a picture of a number plate of the vehicle and using a (costly and slow) internet connection of the mobile phone to upload to a server. Once the mobile phone is connected to the processing unit (e.g. of the vehicle), the processing device can take care of directly connecting the caller's mobile phone (make phone call or send message) to the owner of the vehicle (in embodiments, there is no need of an extra infrastructure like a cloud server).

According to an embodiment, the storing device is configured to store mobile phone identification information which is indicative of a mobile phone identity, and the processing device is configured to use the mobile phone identification information to block communication with a particular mobile phone corresponding to the mobile phone identity. Thus, there would be an option for the owner of the vehicle to block a particular mobile phone, such as blocking a particular IMEI number, e.g. for a particular point of time or period.

According to an embodiment, the communication apparatus further comprises a human machine interface by means of which a user is capable of entering a priority level of any one of the voice data, text data and image data which are to be communicated between the mobile phone and the at least one communication device. For instance, preferably the one of the voice data, text data and image data which are to be communicated between the mobile phone and the at least one communication device includes information indicative of the priority level. In this way, the voice data, text data and/or image data may be attached with a priority level, which helps the owner of the vehicle to decide if he/she should respond immediately.

All embodiments disclosed herein with respect to the communication apparatus may equally and analogously be applied also in connection with the respective methods as described herein.

According to another aspect, the invention relates to a vehicle comprising a communication apparatus according to embodiments of the invention.

Aspects and embodiments of the invention will now be described in more detail with reference to the drawings in which:
- Fig. 1: shows an example configuration of a communication apparatus according to an embodiment of the invention,
- Fig. 2: shows a schematic view of an exemplary communication apparatus according to an embodiment,
- Fig. 3: shows a schematic view of an exemplary communication apparatus according to another embodiment.

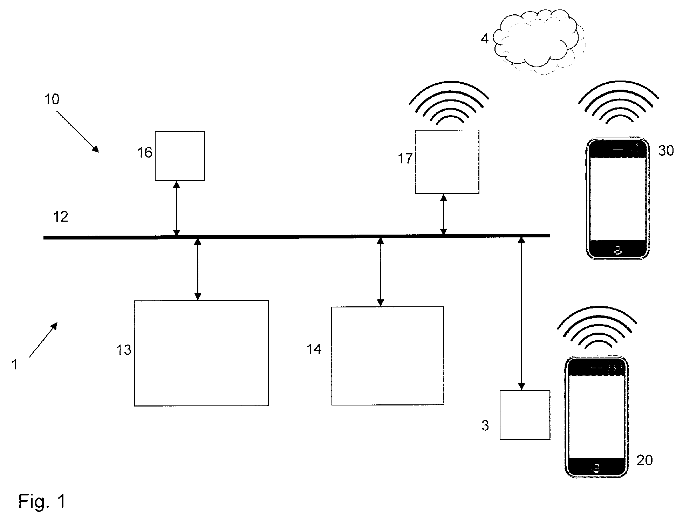

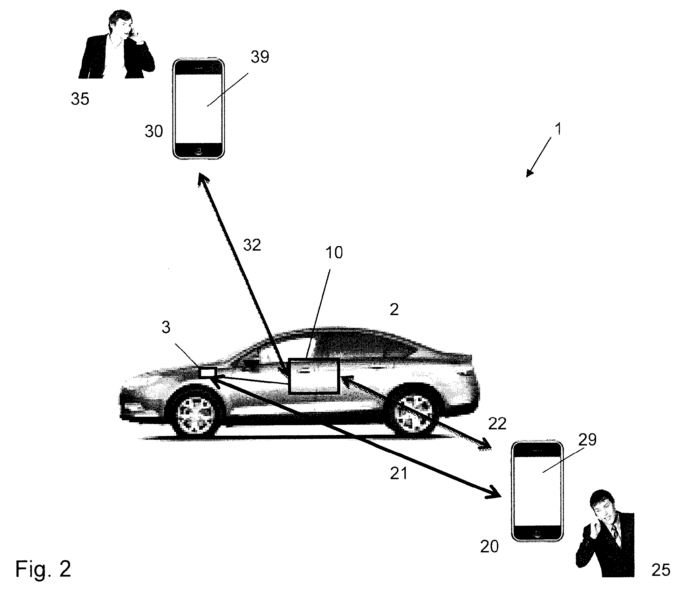

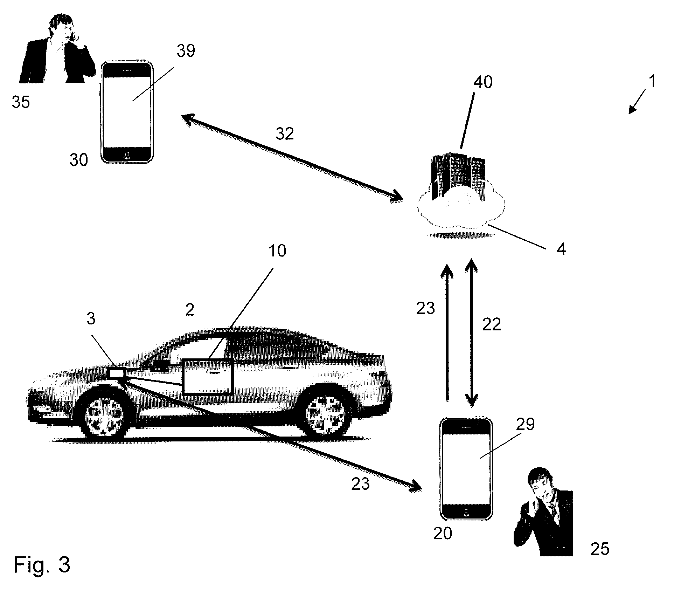

Fig. 1 shows an example configuration of a communication apparatus according to an embodiment of the invention. The communication apparatus 1 may be installed in a vehicle, such as a car 2 (see Fig. 2 and 3), or may be a mobile communication apparatus for use in various vehicles. An example configuration comprises a communications bus 12 which is coupled with various components, such as a processing device 13 and a display device 14 for showing various data (such as used in connection with a head unit of the car) and user instructions. For example, the processing device 13 may be or comprise a microprocessor, such as a central processing unit (CPU), which is used for control and data processing of the communication apparatus, such as controlling and connecting to the mobile network communication device 17, and may perform further tasks, such as calculation and display of map data of a navigation application and/or calculation of routes to a destination, etc. The processing device 13 may also be a distributed system and/or may communicate with components outside the communication apparatus/vehicle for performing the respective function. The display device 14 may be or comprise a screen, such as a touch screen, which may generally serve as a human machine interface to the user, and which may be used for displaying various data and user instructions and may also be used as input interface for receiving user instructions.

The communications bus 12 may further be coupled with a storing device 16 to store communication device data which are indicative of identifying at least one communication device 30 for establishing a communication via a communication network 4. The storage device 16 may be used to store dynamically changeable identifying data regarding one or several communication devices, as explained in more detail below.

The communications bus 12 may further be coupled with a proximity sensor device 3, such as a NFC sensor described above, which is configured to be installed in the car 2. For example, the proximity sensor device 3 may be installed next to a door of the car 2, as shown in Fig. 2 and 3. It may be installed such that it is visible from the outside of the car (for instance, marked with a special symbol), so that a person who wants to contact the owner of the car can easily access the proximity sensor device 3 and exchange the relevant data. The proximity sensor device 3 is capable to sense a mobile phone 20 (or any other communication device having mobile phone capabilities) outside of the vehicle and to communicate with the mobile phone 20 via at least one communication protocol when the mobile phone 20 is within a certain distance from the car 2 and while the car 2 is locked. According to embodiments, distances may be employed as described above.

The mobile network communication device 17 may be, for example, a GSM unit of the car. According to embodiments, the mobile network communication device 17 may be capable to establish a communication with a communications network 4, which may be a mobile telecommunications network and/or a computer communications network, such as the Internet. As such, the mobile network communication device 17 comprises all capabilities for exchanging control and data signals using respective communication protocols involved with the respective communications network 4 used. As such, the mobile network communication device 17 is configured to establish a communication with at least one communication device, such as a mobile phone 30, remote from the car via the communication network 4. For example, if the mobile network communication device 17 is a GSM unit, the mobile network communication device 17 may establish a direct GSM call/text message (such as SMS) to the mobile phone 30 via the network 4.

The components 12, 13, 14, 16, 17 of the communication apparatus 1, as described herein, may be part of a head unit 10 of the vehicle, as is commonly installed in cars in the center part of the dashboard.

Now referring to Fig. 2, according to an embodiment, the processing device 13 is coupled with the proximity sensor device 3 to receive configuration data 21 of the mobile phone 20 while the car 2 is locked. That is, the exchange of configuration data may be done by any person approaching the car 2 by his/her mobile phone 20 automatically without the owner of the car being present or the car being unlocked. For example, as configuration data 21, the processing device 13 gets information regarding establishing a Bluetooth® or WiFi connection to the mobile phone 20, or the mobile phone number of the mobile phone 20. While the car 2 is locked, the processing device 13 uses the configuration data 21 to build up a first communication path 22 between the mobile network communication device 17 and the mobile phone 20 (e.g. via a Bluetooth®) connection, and further to build up a second communication path 32 between the mobile network communication device 17 and the mobile phone 30 via the communication network 4 (e.g. a mobile telecommunications network) according to the communication device data stored in the storing device 16. For example, if the storing device 16 stores the mobile phone number and/or IMEI number of the mobile phone 30 as the communication device data, then a communication path 32 to the corresponding mobile phone 30 is established via the network 4 via appropriate switching, as known in the art. The first and second communication paths 22, 32 are established such that any one of voice data, text data and image data are communicated between the mobile phone 20 and the mobile phone 30. As such, any person 25 can contact the owner and/or driver 35 of the car using his/her mobile phone 20.

In the following, an example of operation for a configuration as shown in Fig. 2 is described. A person 25 who wants to contact the owner 35 of the car 2 starts a mobile app (mobile application) in his mobile phone 20. For instance, such mobile app ("app" as commonly used for a particular application program run on mobile communication devices) may be provided on the mobile phone 20 to automatically establish a communication with the proximity sensor device 3. To this end, the person 25 keeps his mobile phone 20 near to the proximity sensor device 3 of the car 2, e.g. to establish a NFC communication between them. Now his mobile phone 20 gets connected to the car head unit 10 through bluetooth or WiFi communication.

According to an embodiment, the person 25 enters a priority level of the call or message he/she wants to send to the owner 35 into the mobile app. Though the app he/she makes a voice call or sends a text message to the owner 35 wherein the car head unit 10 acts as a gateway (implementing a function, such as of a router, bridge, switch, and/or proxy server). That is, the head unit 10 (or its processing device 13, respectively) may act as an intermediate system that communicates with two (or more) computer networks (via either paths 22, 32) that have same or different functions/protocols or implementations for a one-way or two-way communication. The voice data/message from/to the mobile phone 20 is transferred from/to the processing device 13 of the head unit 10. The processing device 13 then transfers it to the GSM unit 17 of the car, which establishes a direct GSM call/SMS to the owner 35. Based on message priority, the owner 35 who receives the call/message on the mobile phone 30 could make a decision to attend to the voice call/message, or not.

For entering a priority level, a human machine interface (HMI) 29 (e.g. a touch screen interface on mobile phone 20) may be provided by means of which the person 25 is capable of entering a priority level of any one of the voice data, text data and image data which are to be communicated to the owner's mobile phone 30. For instance, the call or message includes information indicative of the priority level, so that the person 35 can decide whether to accept the call.

A human machine interface 39 (e.g. a touch screen interface), for example displayed on the mobile phone 30, enables a person 35 (e.g. the owner or driver of the car) to configure the communication device data of his/her communication device (e.g. mobile phone) 30 to be stored in the storing device 16, which shall be usable by any person who wants to contact the person 35. Such configuration data may also be entered directly in the head unit 10, e.g. via the display device 14. According to another embodiment, the HMI 29 may be used to program the proximity sensor device 3 directly with such communication device data if it contains a storing device, such as a NFC tag.

Now referring to Fig. 3, according to another embodiment, a similar communications apparatus 1 as shown in Fig. 1 may be used in connection with another implementation of a communication apparatus according to embodiments of the invention. Any corresponding components having same or similar functions as described above are designated with same reference numerals and will not be explained in detail again for reasons of brevity.

Again, the proximity sensor device 3 is configured to sense a mobile phone 20 of a person 25 outside of the car 2 and to communicate with his/her mobile phone 20 via at least one communication protocol when the mobile phone 20 is within a certain distance from the car 2 while the car is locked. The processing device, which may be processing device 13 alone or in interaction with any other processing device, such as of mobile phone 20, when having sensed the mobile phone 20 sends the communication device data 23 stored in the storing device 16 to the mobile phone 20 while the car is locked. For example, communication device data 23 such as the mobile phone number and/or IMEI number of the owner's mobile phone 30 are sent to the mobile phone 20.

A mobile network communication device 40, which may be a so-called cloud server computer or any other communications server computer remote from the car 2, is configured to establish a communication with the mobile phone 30 via a communication network 4 according to the communication device data 23. For example, the mobile phone 20 sends the communication device data 23 to the mobile network communication device 40 for establishing a communication to the mobile phone 30. The processing device, for instance processing device 13 alone, the processing device (e.g. a microprocessor) of mobile phone 20 alone, or in any combination with each other, builds up a first communication path 22 between the mobile phone 20 and the mobile network communication device 40, and causes the mobile network communication device 40 to build up a second communication path 32 to the mobile phone 30 via the communication network 4 according to the communication device data 23 such that any one of voice data, text data and image data are communicated between the mobile phone 20 and the mobile phone 30.

In the following, an example of operation for a configuration as shown in Fig. 3 is described. A person 25 who wants to contact the owner 35 of the car starts a mobile app in his mobile phone 20. For instance, such mobile app may be provided on the mobile phone 20 to automatically establish a communication with the proximity sensor device 3 when the person 25 keeps the mobile phone 20 near to the proximity sensor device 3. Thereafter, information about the car, e.g. the mobile phone number and/or IMEI number of the car owner's mobile phone 30, is sent from the storage device 16 to the mobile phone 20. The mobile app running on the mobile phone 20 sends this information to the cloud server computer 40 (e.g. via the Internet), which let the mobile app to connect to the owner's mobile phone 30. In this embodiment, the cloud server computer 40 acts as a gateway.

According to an embodiment, the person 25 may enter a priority level of the call or message he/she wants to send to the owner 35 into the mobile app of mobile phone 20. Though the mobile app he/she makes a voice call or sends a text message to the owner 35 of the car. Based on call/message priority, the owner 35 could make a decision to attend to the call or not.

Generally, there could also be provided an option for the owner 35 of the car to block a particular mobile phone which wants to communicate with the owner's mobile phone 30. For example, there could be provided an option for the owner 35 to block a particular IMEI number (e.g., for a particular time). As such, the storing device 16 may store mobile phone identification information (such as the IMEI number) which is indicative of a mobile phone identity, e.g. configured by person 35 through HMI 39. The processing device 13 then uses the stored mobile phone identification information to block communication with a particular mobile phone 20 corresponding to the mobile phone identity.

The above description relating to the owner of the car may also be applied in connection with any communication device of another person, the data of which are stored in the storing device 16. In principle, instead of the owner's communication device, or in addition to it, the data of a driver's communication device may be stored in storing device 16. According to an embodiment, the storing device 16 may store communication device data of a plurality of communication devices 30 of different users (e.g. the owner and the driver). For instance, the storing device 16 further stores information indicative of whom of the multiple users was driving the car 2 at last. Such information may be included in the communication device data stored in the storing device 16. Such information may be used to establish a connection to the user who was driving the car 2 at last.

Thus, according to embodiments of the invention, the car head unit 10 and/or the cloud server computer 40 knows the contact details of the car's owners and/or drivers. If there are multiple owners and/or drivers, the storing device 16 may keep the information who was driving last. Same is sent to the cloud server computer 40. There may also be a possibility to configure (e.g., with car HMI or cloud web user login on the server computer 40) the preference to contact a particular owner/driver. There may also be a possibility to have different preference settings based on time and date.

According to aspects of the invention, an advantage of the invention is that there is provided an option for a person to contact an owner or driver of a car when necessary. The owner's or driver's contact details are not revealed. A primary method of contacting the owner/driver of the car may be by placing the mobile phone near a NFC (Near Field communication) sensor device installed in the car. This is far more convenient, faster and reliable than, e.g., taking a picture of a number plate and to upload the same to a server computer.

While the present invention is described in terms of some specific examples and embodiments, the present invention is not limited to these examples and embodiments and the contents of the present invention should not be interpreted in a limited way. It will be clear that any changes and modified embodiments will be evident to those skilled in the art without departing from the scope of the claims.

## Claims

1. A communication apparatus (1) for communicating with at least one communication device (30) remote from a vehicle (2), comprising
- a proximity sensor device (3) configured to be installed in a vehicle (2) and to sense a mobile phone (20) outside of the vehicle and to communicate with the mobile phone (20) via at least one communication protocol when the mobile phone (20) is within a certain distance from the vehicle (2) and while the vehicle (2) is locked,
- a mobile network communication device (17) configured to be installed in the vehicle (2) and to establish a communication with the at least one communication device (30) remote from the vehicle via a communication network (4),
- a storing device (16) configured to be installed in the vehicle (2) and to store communication device data which are indicative of identifying the at least one communication device (30) for establishing a communication via the communication network (4), and
- a processing device (13) which is coupled with the proximity sensor device (3) for receiving configuration data (21) of the mobile phone (20) sensed by the proximity sensor device (3),
- wherein the processing device (13), while the vehicle (2) is locked, is configured to use the configuration data (21) to build up a first communication path (22) between the mobile network communication device (17) and the mobile phone (20), and configured to build up a second communication path (32) between the mobile network communication device (17) and the at least one communication device (30) via the communication network (4) according to the stored communication device data,
- wherein the processing device (13) is configured to build up the first and second communication paths (22, 32) such that any one of voice data, text data and image data are communicated between the mobile phone (20) and the at least one communication device (30).

2. The communication apparatus according to claim 1, wherein the processing device (13) is configured to be installed at least in part in the vehicle (2).

3. A communication apparatus (1) for communicating with at least one communication device (30) remote from a vehicle (2), comprising
- a proximity sensor device (3) configured to be installed in a vehicle (2) and to sense a mobile phone (20) outside of the vehicle (2) and to communicate with the mobile phone (20) via at least one communication protocol when the mobile phone (20) is within a certain distance from the vehicle (2) and while the vehicle (2) is locked,
- a mobile network communication device (40) configured to establish a communication with the at least one communication device (30) remote from the vehicle (2) via a communication network (4),
- a storing device (16) configured to be installed in the vehicle (2) and to store communication device data (23) which are indicative of identifying the at least one communication device (30) for establishing a communication via the communication network (4), and
- a processing device (13, 20) configured to send the stored communication device data (23) to the mobile phone (20) while the vehicle (2) is locked,
- wherein the processing device (13, 20) is configured to build up a first communication path (22) between the mobile phone (20) and the mobile network communication device (40), and to cause the mobile network communication device (40) to build up a second communication path (32) to the at least one communication device (30) via the communication network (4) according to the communication device data (23) such that any one of voice data, text data and image data are communicated between the mobile phone (20) and the at least one communication device (30).

4. The communication apparatus according to claim 3, wherein the mobile network communication device (40) is configured to be installed remote from the vehicle (2), in particular is comprised in a server computer (40) remote from the vehicle.

5. The communication apparatus according to claim 3 or 4, wherein the processing device (13, 20) is comprised at least in part in at least one of the vehicle (2), the mobile phone (20) and the mobile network communication device (40).

6. The communication apparatus according to one of claims 1 to 5, wherein the communication device data are indicative of a communication device (30) of the owner (35) of the vehicle (2).

7. The communication apparatus according to one of claims 1 to 6,
- wherein the storing device (16) is configured to store communication device data of a plurality of communication devices (30) of different users (35),
- wherein the storing device (16) is further configured to store information indicative of whom of the users (35) was driving the vehicle (2) at last and which is included in the communication device data.

8. The communication apparatus according to one of claims 1 to 7, further comprising a human machine interface (39) by means of which a user (35) is capable of configuring the communication device data of the at least one communication device (30).

9. The communication apparatus according to claim 8, wherein
- the communication device data include at least one of a time and date information, and
- the processing device (13) is configured to use the at least one of time and date information whether or not to build up at least one of the first and second communication paths (22, 32), and/or
- the processing device (13) is configured to use the at least one of time and date information to select a particular communication device (30) out of a plurality of communication devices, the communication device data of which are stored in the storing device (16).

10. The communication apparatus according to one of claims 1 to 9, wherein the proximity sensor device (3) is or includes a Near Field Communication sensor device.

11. The communication apparatus according to one of claims 1 to 10, wherein
- the storing device (16) is configured to store mobile phone identification information which is indicative of a mobile phone identity, and
- the processing device (13) is configured to use the mobile phone identification information to block communication with a particular mobile phone (20) corresponding to the mobile phone identity.

12. The communication apparatus according to one of claims 1 to 11, further comprising a human machine interface (29) by means of which a user (25) is capable of entering a priority level of any one of the voice data, text data and image data which are to be communicated between the mobile phone (20) and the at least one communication device (30), particularly wherein the one of the voice data, text data and image data which are to be communicated between the mobile phone (20) and the at least one communication device (30) includes information indicative of the priority level.

13. A method of communicating with at least one communication device (30) remote from a vehicle (2), comprising
- sensing with a proximity sensor device (3) installed in a vehicle (2) a mobile phone (20) outside of the vehicle (2), the proximity sensor device (3) communicating with the mobile phone (20) via at least one communication protocol when the mobile phone (20) is within a certain distance from the vehicle (2) and receiving configuration data (21) of the mobile phone (20) sensed by the proximity sensor device (3) while the vehicle (2) is locked,
- building up a first communication path (22) between the mobile phone (20) and a mobile network communication device (17) installed in the vehicle (2) using the configuration data (21) of the mobile phone (20) while the vehicle (2) is locked, and building up a second communication path (32) between the mobile network communication device (17) and the at least one communication device (30) via a communication network (4) according to communication device data stored in a storing device (16) installed in the vehicle, wherein the communication device data are indicative of identifying the at least one communication device (30) for establishing a communication via the communication network (4),
- wherein the first and second communication paths (22, 32) are built up such that any one of voice data, text data and image data are communicated between the mobile phone (20) and the at least one communication device (30).

14. A method of communicating with at least one communication device (30) remote from a vehicle (2), comprising
- receiving communication device data (23) stored in a storing device (16) installed in the vehicle (2) by a mobile phone (20) outside of the vehicle (2) after sensing the mobile phone (20) with a proximity sensor device (3) installed in the vehicle (2) while the vehicle (2) is locked, the mobile phone (20) communicating with the proximity sensor device (3) via at least one communication protocol when the mobile phone (20) is within a certain distance from the vehicle (2) and while the vehicle (2) is locked, wherein the communication device data (23) are indicative of identifying the at least one communication device (30) for establishing a communication via a communication network (4),
- building up a first communication path (22) between the mobile phone (20) and a mobile network communication device (40), and causing the mobile network communication device (40) to build up a second communication path (32) between the mobile network communication device (40) and the at least one communication device (30) via the communication network (4) according to the received communication device data (23),
- wherein the first and second communication paths (22, 32) are built up such that any one of voice data, text data and image data are communicated between the mobile phone (20) and the at least one communication device (30).

15. A computer program product comprising software code sections which are adapted to perform a method according to claim 13 or 14 when loaded into a computer system.
